(19) Europäisches Patentamt
European Patent Office
Office européen des brevets

(11) **EP 3 960 638 A1**

(12) **EUROPEAN PATENT APPLICATION**

(43) Date of publication:
**02.03.2022  Bulletin 2022/09**

(21) Application number: **21192662.1**

(22) Date of filing: **23.08.2021**

(51) International Patent Classification (IPC):
**B64G 1/24** *(2006.01)*        **G05D 1/00** *(2006.01)*
**G08G 5/00** *(2006.01)*

(52) Cooperative Patent Classification (CPC):
**G05D 1/0005; B64G 1/244; G08G 5/00;**
B64G 2001/245

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.08.2020  CN 202010853935**

(71) Applicants:
• **Beijing Interstellar Glory Space
Technology Co., Ltd.
Beijing 100032 (CN)**

• **Beijing Interstellar Glory Technology LLC
Beijing 100176 (CN)**

(72) Inventors:
• **PENG, Xiaobo
Beijing, 100032 (CN)**
• **DONG, Yanmin
Beijing, 100032 (CN)**
• **SHI, Jianbo
Beijing, 100032 (CN)**

(74) Representative: **HGF
HGF Europe LLP
Neumarkter Straße 18
81673 München (DE)**

(54) **ENERGY MANAGEMENT METHOD FOR AIRCRAFT, CONTROL METHOD AND AIRCRAFT**

(57)    The present invention relates to the technical field of energy management, and particularly to an energy management method for an aircraft, a control method and an aircraft. The energy management method comprises: acquiring a consumption amount of an apparent velocity modulus, an apparent velocity direction, a consumption amount of an apparent velocity, and a number of attitude angle adjustments of a target aircraft, wherein the number of adjustments is greater than or equal to 3; calculating the size of a target attitude angle based on the consumption amount of the apparent velocity modulus and the consumption amount of the apparent velocity; and determining, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero. By setting the number of attitude angle adjustments of the target aircraft to be greater than or equal to 3, the velocity and the apparent distance of the adjusted target aircraft in the direction perpendicular to the apparent velocity direction are both zero while energy is consumed, which can effectively improve the accuracy of orbit control in energy management.

Fig. 5

EP 3 960 638 A1

**Description**

Field

The present invention relates to the technical field of energy management, and particularly to an energy management method for an aircraft, a control method and an aircraft.

Background

The so-called energy management refers to management of energy output during operation of an engine, so energy management can only be performed in an active flight stage (i.e., during operation of the engine). The energy management of an aircraft is generally achieved by attitude adjustment of the aircraft during flight. For example, energy generated by the engine of the aircraft during normal operation is W1, and energy required downstream of the engine is W2. Hence, there is an energy difference of (W1-W2), and the energy difference needs to be consumed through energy management without affecting normal flight of the aircraft after the end of energy consumption.

For energy management of an aircraft, such as a solid rocket, the inventors attempted to use a bi-directional attitude angle adjustment strategy for energy management of the aircraft. However, the inventors found, in the energy management of the aircraft by the bi-directional attitude angle adjustment strategy, that the strategy can effectively perform energy management of the solid rocket and suppress a velocity increment perpendicular to an apparent velocity, but this strategy leads to a non-zero lateral displacement corresponding to the apparent velocity during the energy management, resulting in a large deviation from an orbit with positional accuracy requirement.

Summary

In view of this, embodiments of the present invention provide an energy management method for an aircraft, a control method and an aircraft, to solve the problem that the existing energy management method leads to a large deviation from a flight orbit of an aircraft.

According to a first aspect, an embodiment of the present invention provides an energy management method for an aircraft, including:

acquiring a consumption amount of an apparent velocity modulus, an apparent velocity direction, a consumption amount of an apparent velocity, and a number of attitude angle adjustments of a target aircraft, wherein the number of adjustments is greater than or equal to 3;

calculating the size of a target attitude angle based on the consumption amount of the apparent velocity modulus and the consumption amount of the apparent velocity; and

determining, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero.

In the energy management method for an aircraft provided in the embodiment of the present invention, the number of attitude angle adjustments of the target aircraft is set to be greater than or equal to 3, and the adjustment direction and the consumed amount of the apparent velocity modulus in each attitude angle adjustment are determined, so that the velocity and the apparent distance of the adjusted target aircraft in the direction perpendicular to the apparent velocity direction are both zero while energy is consumed, i.e., so that a theoretical velocity deviation and a theoretical displacement deviation arising from energy management are both zero, which can effectively improve the accuracy of orbit control in energy management.

In conjunction with the first aspect, in a first implementation of the first aspect, the number of adjustments is 3, wherein determining, based on the consumption amount of the apparent velocity modulus, the apparent velocity direction and the number of adjustments, an adjustment direction and time relationship in each attitude angle adjustment, so that a velocity and an apparent distance of the adjusted aircraft in a direction perpendicular to the apparent velocity direction are both zero includes:

determining, based on the number of adjustments and the apparent velocity direction, a direction of a first attitude angle adjustment to be a first direction perpendicular to the apparent velocity direction, a direction of a second attitude angle adjustment to be a second direction perpendicular to the apparent velocity direction, and a direction of a third attitude angle adjustment to be the first direction, wherein the first direction is opposite to the second direction; and

determining the consumed amount of the apparent velocity modulus in each attitude angle adjustment by using the consumption amount of the apparent velocity modulus and the number of adjustments, wherein the sum of a consumed amount of the apparent velocity modulus in the first attitude angle adjustment and a consumed amount of the apparent velocity modulus in the third attitude angle adjustment is equal to a consumed amount of the apparent velocity modulus in the second attitude angle adjustment.

In the energy management method for an aircraft provided in the embodiment of the present invention, energy management is performed by three attitude angle adjustments, which reduces the number of attitude angle adjustments, reduces the data processing amount, and improves the efficiency of energy management while ensuring that the accuracy of orbit control by energy management is not affected.

In conjunction with the first implementation of the first aspect, in a second implementation of the first aspect, the consumed amount of the apparent velocity modulus in each attitude angle adjustment is expressed by the following formula:

$$(W_1 - W_0) + (W_3 - W_2) = (W_2 - W_1),$$

where $W_0 = 0$, $W_1$ is the consumed amount of the apparent velocity modulus in the first attitude angle adjustment, $W_2$ is the sum of the consumed amounts of the apparent velocity modulus in the first attitude angle adjustment and the second attitude angle adjustment, and $W_3$ is the sum of the consumed amounts of the apparent velocity modulus in the first attitude angle adjustment, the second attitude angle adjustment and the third attitude angle adjustment.

In conjunction with the second implementation of the first aspect, in a third implementation of the first aspect, the consumed amount of the apparent velocity modulus in the first attitude angle adjustment is equal to the consumed amount of the apparent velocity modulus in the third attitude angle adjustment.

In the energy management method for an aircraft provided in the embodiment of the present invention, by setting the consumed amounts of the apparent velocity modulus in the first attitude angle adjustment and the third attitude angle adjustment to be equal, energy management can be simplified and the efficiency of energy management is improved.

In conjunction with the first implementation of the first aspect, in a fourth implementation of the first aspect, determining the consumed amount of the apparent velocity modulus in each attitude angle adjustment by using the consumption amount of the apparent velocity modulus and the number of adjustments includes: determining adjustment time in each attitude angle adjustment by using the consumption amount of the apparent velocity modulus and the number of adjustments, wherein the adjustment time corresponds to the consumed amount of the apparent velocity modulus in the attitude angle adjustment.

In the energy management method for an aircraft provided in the embodiment of the present invention, the adjustment time of each attitude angle adjustment is defined to determine the consumed amount of the apparent velocity modulus in each attitude angle adjustment. As the time is relatively easier to control than the apparent velocity modulus, reflecting the consumed amount of the apparent velocity modulus in each attitude angle adjustment by the adjustment time of each attitude angle adjustment improves the accuracy of energy management.

In conjunction with the fourth implementation of the first aspect, in a fifth implementation of the first aspect, adjustment time in the first attitude angle adjustment is equal to adjustment time in the third attitude angle adjustment.

In conjunction with the first to fifth implementations of the first aspect, in a sixth implementation of the first aspect, the size of the target attitude angle is calculated by the following formula:

$$\varphi_{pr} = \mathrm{acos}\left(1 - \frac{\Delta V}{W_3}\right),$$

where $\varphi_{pr}$ is the target attitude angle, $\Delta V$ is the consumption amount of the apparent velocity, and $W_3$ is the sum of the consumed amounts of the apparent velocity modulus in the first attitude angle adjustment, the second attitude angle adjustment and the third attitude angle adjustment.

According to a second aspect, an embodiment of the present invention further provides a flight control method for an aircraft, including:

acquiring an adjustment direction and a consumed amount of an apparent velocity modulus in each attitude angle adjustment of the aircraft, wherein the adjustment direction and the consumed amount of the apparent velocity modulus in each attitude angle adjustment are determined according to the energy management method for an aircraft in the first aspect or in any implementation of the first aspect of the present invention; and

controlling the aircraft based on the adjustment direction and the consumed amount of the apparent velocity modulus in each attitude angle adjustment.

In the flight control method for an aircraft provided in this embodiment, due to the adjustment direction and the consumed amount of the apparent velocity modulus in each attitude angle adjustment, a velocity and an apparent distance of the adjusted target aircraft in a direction perpendicular to an apparent velocity direction are both zero while energy is consumed, i.e., a theoretical velocity deviation and a theoretical displacement deviation arising from energy management are both zero, which effectively improves the accuracy of orbit control in energy management, thereby improving the accuracy of flight control.

According to a third aspect, an embodiment of the present invention further provides an energy management apparatus for an aircraft, including:

a first acquisition module configured to acquire a consumption amount of an apparent velocity modulus, an apparent velocity direction, a consumption amount of an apparent velocity, and a number of attitude angle adjustments of a target aircraft, wherein the number of adjustments is greater than or equal to 3;

a calculation module configured to calculate the size of a target attitude angle based on the consumption amount of the apparent velocity modulus and the consumption amount of the apparent velocity; and

a determination module configured to determine, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero.

In the energy management apparatus for an aircraft provided in the embodiment of the present invention, the number of attitude angle adjustments of the target aircraft is set to be greater than or equal to 3, and the adjustment direction and the consumed amount of the apparent velocity modulus in each attitude angle adjustment are determined, so that the velocity and the apparent distance of the adjusted target aircraft in the direction perpendicular to the apparent velocity direction are both zero while energy is consumed, i.e., so that a theoretical velocity deviation and a theoretical displacement deviation arising from energy management are both zero, which can effectively improve the accuracy of orbit control in energy management.

According to a fourth aspect, an embodiment of the present invention further provides a flight control apparatus for an aircraft, including:

a second acquisition module configured to acquire an adjustment direction and a consumed amount of an apparent velocity modulus in each attitude angle adjustment of the aircraft, wherein the adjustment direction and the consumed amount of the apparent velocity modulus in each attitude angle adjustment are determined according to the energy management method for an aircraft in the first aspect or in any implementation of the first aspect of the present invention; and

a control module configured to control the target aircraft based on the adjustment direction and the consumed amount of the apparent velocity modulus in each attitude angle adjustment.

In the flight control apparatus for an aircraft provided in the embodiment of the present invention, due to the adjustment direction and the consumed amount of the apparent velocity modulus in each attitude angle adjustment, a velocity and an apparent distance of the adjusted target aircraft in a direction perpendicular to an apparent velocity direction are both zero while energy is consumed, i.e., a theoretical velocity deviation and a theoretical displacement deviation arising from energy management are both zero, which effectively improves the accuracy of orbit control in energy management, thereby improving the accuracy of flight control.

According to a fifth aspect, an embodiment of the present invention provides an electronic device, including a memory and a processor, wherein the memory and the processor are communicatively connected to each other, and the memory stores computer instructions, which are executed by the processor to perform the energy management method for an aircraft in the first aspect or in any implementation of the first aspect or perform the control method for an aircraft in the second aspect.

According to a sixth aspect, an embodiment of the present invention provides a computer-readable storage medium, which stores computer instructions, wherein the computer instructions are configured to cause a computer to perform the energy management method for an aircraft in the first aspect or in any implementation of the first aspect or perform the control method for an aircraft in the second aspect.

Brief Description of the Drawings

To describe the technical solutions in the embodiments of the present invention or in the prior art more clearly, the accompanying drawings to be used in the description of the embodiments or the prior art are introduced below briefly. Obviously, the accompanying drawings in the following description are merely some of the embodiments of the present invention, and for those of ordinary skill in the art, other drawings may also be obtained based on these drawings without creative work.

Fig. 1 shows a schematic diagram of a relationship between an attitude angle and a consumption amount of an apparent velocity modulus in bidirectional attitude angle adjustment;

Fig. 2 shows a schematic diagram of a relationship between an attitude angle and a consumption amount of an apparent velocity modulus in bidirectional attitude angle adjustment;

Fig. 3 shows a schematic diagram of a relationship between an apparent velocity increment perpendicular to an apparent velocity direction and a consumed amount of an apparent velocity modulus in bidirectional attitude angle adjustment;

Fig. 4 shows a schematic diagram of a relationship between an apparent velocity displacement perpendicular to an apparent velocity direction and a consumed amount of an apparent velocity modulus in bidirectional attitude angle adjustment;

Fig. 5 is a flow diagram of an energy management method for an aircraft according to an embodiment of the present invention;

Fig. 6 is a flow diagram of an energy management method for an aircraft according to an embodiment of the present invention;

Fig. 7 is a schematic diagram of a relationship between an attitude angle a consumption amount of an apparent velocity modulus in three attitude angle adjustments according to an embodiment of the present invention;

Fig. 8 is a schematic diagram of a relationship between an attitude angle a consumption amount of an apparent velocity modulus in three attitude angle adjustments according to an embodiment of the present invention;

Fig. 9 shows a schematic diagram of a relationship between an apparent velocity increment perpendicular to an apparent velocity direction and a consumed amount of an apparent velocity modulus in three attitude angle adjustments according to an embodiment of the present invention;

Fig. 10 is a schematic diagram of a relationship between an apparent velocity displacement perpendicular to an apparent velocity direction and a consumed amount of an apparent velocity modulus in three attitude angle adjustments according to an embodiment of the present invention;

Fig. 11 is a flow diagram of a flight control method for an aircraft according to an embodiment of the present invention;

Fig. 12 is a structural block diagram of an energy management apparatus for an aircraft according to an embodiment of the present invention;

Fig. 13 is a structural block diagram of a flight control method for an aircraft according to an embodiment of the present invention; and

Fig. 14 is a hardware structural diagram of an aircraft provided in an embodiment of the present invention.

Detailed Description of the Embodiments

To make the objects, technical solutions and advantages of the embodiments of the present invention clearer, the technical solutions in the embodiments of the present invention will be described below clearly and completely in conjunction with the accompanying drawings in the embodiments of the present invention. Obviously, the described embodiments are only a part of the embodiments of the present invention, and not all the embodiments. All other embodiments obtained by those skilled in the art based on the embodiments in the present invention without creative work fall into the protection scope of the present invention.

For example, a current location point is A and a target location point is B. For convenience of description, terms involved in the following are explained as follows:

apparent velocity: a velocity in a specified direction, e.g., a velocity along an axis of an aircraft;

direction of a required velocity increase: an apparent velocity direction;

lateral displacement: a distance in a direction perpendicular to a connecting line AB;

end velocity increment: a component in the direction perpendicular to the connecting line AB, of a velocity increment at the point B;

end positional accuracy: a vertical distance between the position at the terminal and the connecting line AB.

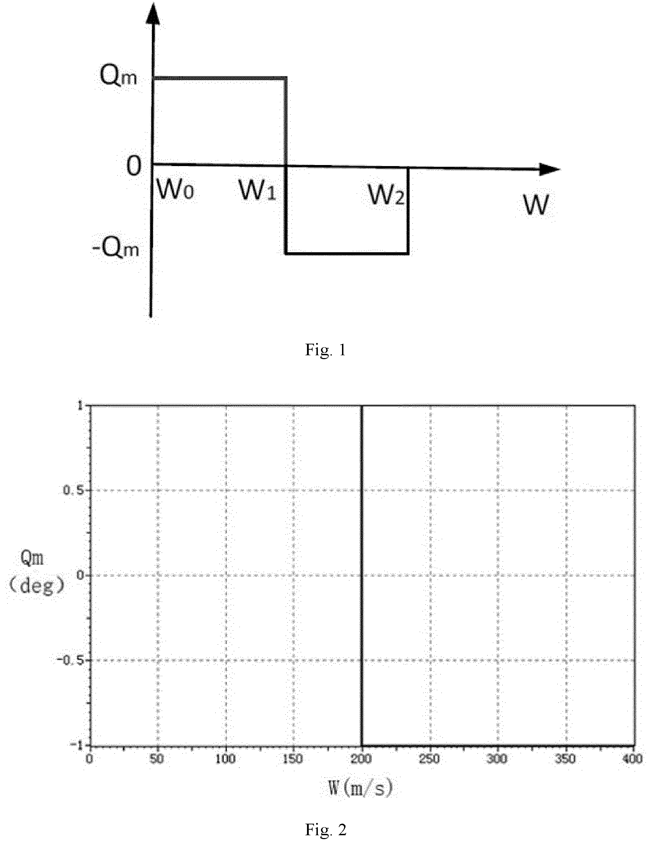

Reference is made to Fig. 1, which illustrates a relationship between an attitude angle a consumption amount of an apparent velocity modulus in a bidirectional attitude angle adjustment strategy. The bidirectional attitude angle adjustment shown can ensure zero apparent velocity increment in directions other than the direction of the required velocity increase after a target aircraft engine is turned off. W is the consumption amount of the apparent velocity modulus, Qm is an attitude angle with respect to the direction of the required velocity increase, $W_0$ is an initial consumption amount of the apparent velocity modulus, $W_1$ is a consumption amount of the apparent velocity modulus after a first attitude angle adjustment, $W_2$ is the sum of consumed amounts of the apparent velocity modulus in the first attitude angle adjustment and a second attitude angle adjustment.

As shown in Fig. 2, W is the consumption amount of the apparent velocity modulus, and Qm is the attitude angle with respect to the direction of the required velocity increase. This method achieves the purpose of consuming an excess apparent velocity by flying with a deviation of a swing angle of the engine from the direction of the required velocity increase by a certain angle. Furthermore, to ensure that at a terminal point, the apparent velocity increment in the perpendicular direction is also 0, therefore, an energy dissipation formula for bidirectional attitude adjustment meets the following requirements:

$$W_1 - W_0 = W_2 - W_1,$$

and

$$\varphi_{pr} = \mathrm{acos}\left(1 - \frac{\Delta V}{W_2}\right),$$

where $W_0$ is the initial consumption amount of the apparent velocity modulus, $W_1$ is the consumed amount of the apparent velocity modulus in the first attitude angle adjustment, $W_2$ is the sum of the consumed amounts of the apparent velocity modulus in the first attitude angle adjustment and a second attitude angle adjustment, $\varphi_{pr}$ is the attitude angle, and $\Delta V$ is a consumption amount of the apparent velocity.

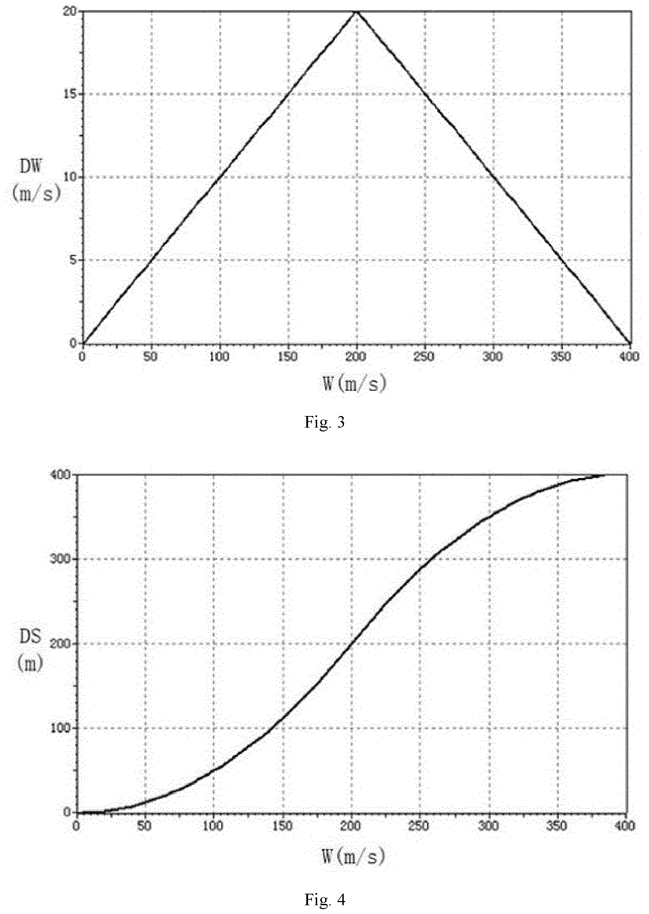

Reference is made to Figs. 3 and 4. Fig. 3 illustrates a relationship between the apparent velocity increment (DW) perpendicular to the apparent velocity direction and the consumption amount (W) of the apparent velocity modulus, and Fig. 4 illustrates a relationship between an apparent velocity displacement (DS) perpendicular to the apparent velocity direction and the consumption amount (W) of the apparent velocity modulus. As seen from calculation results shown in Figs. 3 and 4, although the velocity (DW) perpendicular to the direction W at the energy management terminal (i.e., W2) is 0, the apparent distance (DS) there is not 0. The direction W is the apparent velocity direction. Therefore, the bidirectional attitude angle adjustment strategy leads to a non-zero lateral displacement corresponding to the apparent velocity during the energy management, resulting in a large deviation from an orbit with positional accuracy requirement. Based on this, the present application proposes an energy management method for an aircraft, in which an attitude angle of a target aircraft is adjusted at least three times so that a velocity and an apparent distance of the adjusted target aircraft in a direction perpendicular to the apparent velocity direction are both zero.

According to embodiments of the present invention, there is provided an embodiment of an energy management method for an aircraft. It is to be noted that steps illustrated in flow diagrams of the accompanying drawings may be performed in a computer system such as a set of computer executable instructions, and although a logical sequence is illustrated in such a flow diagram, in some situations the steps shown or described may be performed in a sequence different from that shown herein.

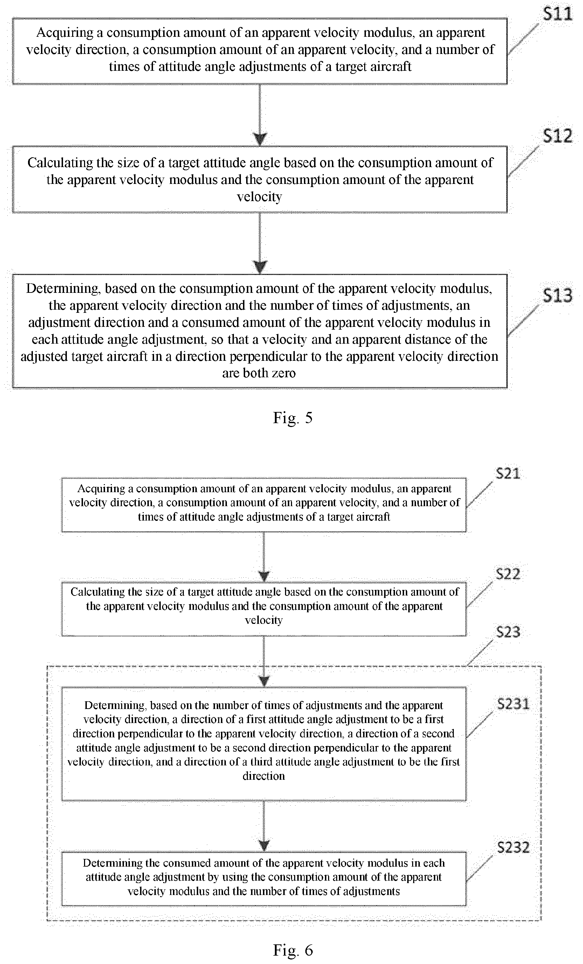

In this embodiment, there is provided an energy management method for an aircraft. The method may be used in an aircraft, such as a solid rocket. Fig. 5 is a flow diagram of an energy management method for an aircraft according to an embodiment of the present invention. As shown in Fig. 5, the process includes steps as follows:

S11, acquiring a consumption amount of an apparent velocity modulus, an apparent velocity direction, a consumption amount of an apparent velocity, and a number of attitude angle adjustments of a target aircraft.

The number of adjustments is greater than or equal to 3.

During control of the target aircraft, the consumption amount of the apparent velocity modulus, the apparent velocity direction and the consumption amount of the apparent velocity may all be acquired from parameters collected in the target aircraft. The number of attitude angle adjustments of the target aircraft may be correspondingly set according to the actual situation, so long as it ensures the number of adjustments is greater than or equal to 3.

The energy management method for an aircraft described in this embodiment is equivalent to adding at least one attitude angle adjustment to the bi-directional attitude angle adjustment, and the specific number of added adjustments may be correspondingly set according to the actual situation.

S12, calculating the size of a target attitude angle based on the consumption amount of the apparent velocity modulus and the consumption amount of the apparent velocity.

After acquiring the consumption amount of the apparent velocity modulus and the consumption amount of the apparent velocity, the target aircraft calculates the size of a target attitude angle by using the consumption amount of the apparent velocity modulus and the consumption amount of the apparent velocity. The purpose of attitude angle adjustment of the target aircraft is consuming the consumption amount of the apparent velocity modulus and the consumption amount of the apparent velocity, so the size of the target attitude angle can be obtained by using a geometric relationship between the consumption amount of the apparent velocity modulus, the consumption amount of the apparent velocity and the target attitude angle.

S13, determining, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero.

After acquiring the number of attitude angle adjustments, the target aircraft may calculate a consumed amount of the apparent velocity modulus in each adjustment and determine an adjustment direction in each adjustment by using the consumption amount of the apparent velocity modulus and the number of adjustments. To ensure that the velocity and the apparent distance of the adjusted target aircraft in the direction perpendicular to the apparent velocity direction are both zero, the attitude angle adjustment direction may be set to be perpendicular to the apparent velocity direction, and the adjustment directions of the attitude angle adjustments are different.

The consumed amount of the apparent velocity modulus in each attitude angle adjustment is related to the number of attitude angle adjustments. The consumed amount of the apparent velocity modulus in each attitude angle adjustment may be proportioned, or the consumed amount of the apparent velocity modulus in each attitude angle adjustment may be determined according to the actual situation, etc. This step is not limited in any way in this embodiment, and will be specifically described in detail below.

In the energy management method for an aircraft provided in this embodiment, the number of attitude angle adjustments of the target aircraft is set to be greater than or equal to 3, and the adjustment direction and the consumed amount of the apparent velocity modulus in each attitude angle adjustment are determined, so that the velocity and the apparent distance of the adjusted target aircraft in the direction perpendicular to the apparent velocity direction are both zero while energy is consumed, i.e., so that a theoretical velocity deviation and a theoretical displacement deviation arising from energy management are both zero, which can effectively improve the accuracy of orbit control in energy management.

In this embodiment, there is provided an energy management method for an aircraft. The method may be used in an aircraft, such as a solid rocket. Fig. 6 is a flow diagram of an energy management method for an aircraft according to an embodiment of the present invention. As shown in Fig. 6, the process includes steps as follows:

S21, acquiring a consumption amount of an apparent velocity modulus, an apparent velocity direction, a consumption amount of an apparent velocity, and a number of attitude angle adjustments of a target aircraft.

The number of adjustments is greater than or equal to 3.

See S11 of the embodiment shown in Fig. 5 for details, which will not be repeated here.

S22, calculating the size of a target attitude angle based on the consumption amount of the apparent velocity modulus and the consumption amount of the apparent velocity.

The size of the target attitude angle is calculated by the following formula:

$$\varphi_{pr} = \mathrm{acos}\left(1 - \frac{\Delta V}{W_3}\right),$$

where $\varphi_{pr}$ is the target attitude angle, $\Delta V$ is the consumption amount of the apparent velocity, and $W_3$ is the sum of a consumed amounts of the apparent velocity modulus in a first attitude angle adjustment, a second attitude angle adjustment and a third attitude angle adjustment.

S23, determining, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero.

In this embodiment, detailed description is made by using 3 attitude angle adjustments as an example, i.e., the number of adjustments being 3 as an example.

Specifically, the above-mentioned S23 includes the following steps:

S231, determining, based on the number of adjustments and the apparent velocity direction, a direction of a first attitude angle adjustment to be a first direction perpendicular to the apparent velocity direction, a direction of a second attitude angle adjustment to be a second direction perpendicular to the apparent velocity direction, and a direction of a third attitude angle adjustment to be the first direction.

The first direction is opposite to the second direction.

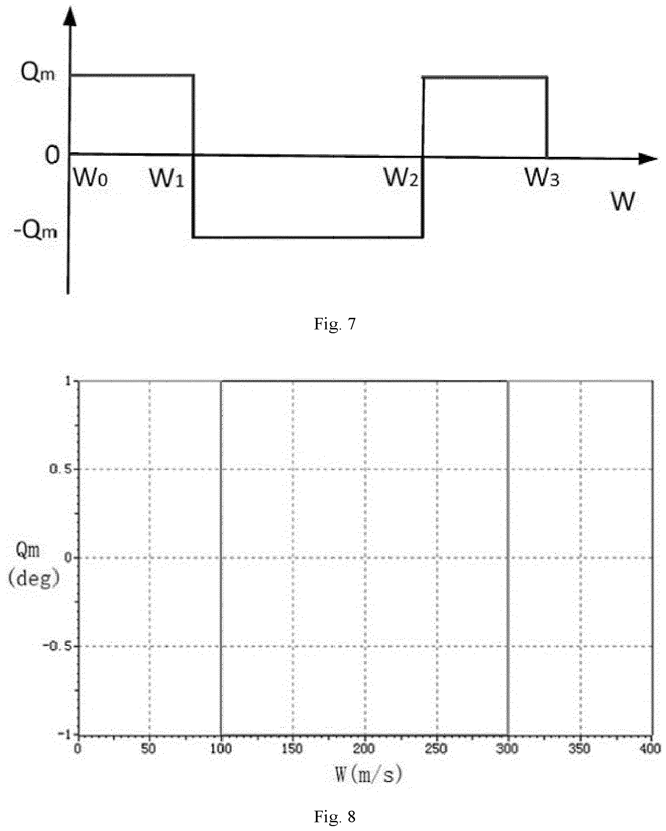

As shown in Fig. 7, the first direction perpendicular to the apparent velocity direction is defined as a positive direction, and the second direction is defined as a negative direction. Then, the direction of the first attitude angle adjustment is the positive direction, the direction of the second attitude angle adjustment is the negative direction, and the direction of the third attitude angle adjustment is the positive direction.

S232, determining the consumed amount of the apparent velocity modulus in each attitude angle adjustment by using the consumption amount of the apparent velocity modulus and the number of adjustments.

The sum of a consumed amount of the apparent velocity modulus in the first attitude angle adjustment and a consumed amount of the apparent velocity modulus in the third attitude angle adjustment is equal to a consumed amount of the apparent velocity modulus in the second attitude angle adjustment.

For example, the consumed amount of the apparent velocity modulus in each attitude angle adjustment is expressed by the following formula:

$$(W_1 - W_0) + (W_3 - W_2) = (W_2 - W_1),$$

where $W_0=0$, $W_1$ is the consumed amount of the apparent velocity modulus in the first attitude angle adjustment, $W_2$ is the sum of the consumed amounts of the apparent velocity modulus in the first attitude angle adjustment and the second attitude angle adjustment, and $W_3$ is the sum of the consumed amounts of the apparent velocity modulus in the first attitude angle adjustment, the second attitude angle adjustment and the third attitude angle adjustment.

As an optional implementation of this embodiment, as shown in Fig. 7, the consumed amount of the apparent velocity modulus in the first attitude angle adjustment is equal to the consumed amount of the apparent velocity modulus in the third attitude angle adjustment. That is, $W_1 - W_0 = W_3 - W_2$.

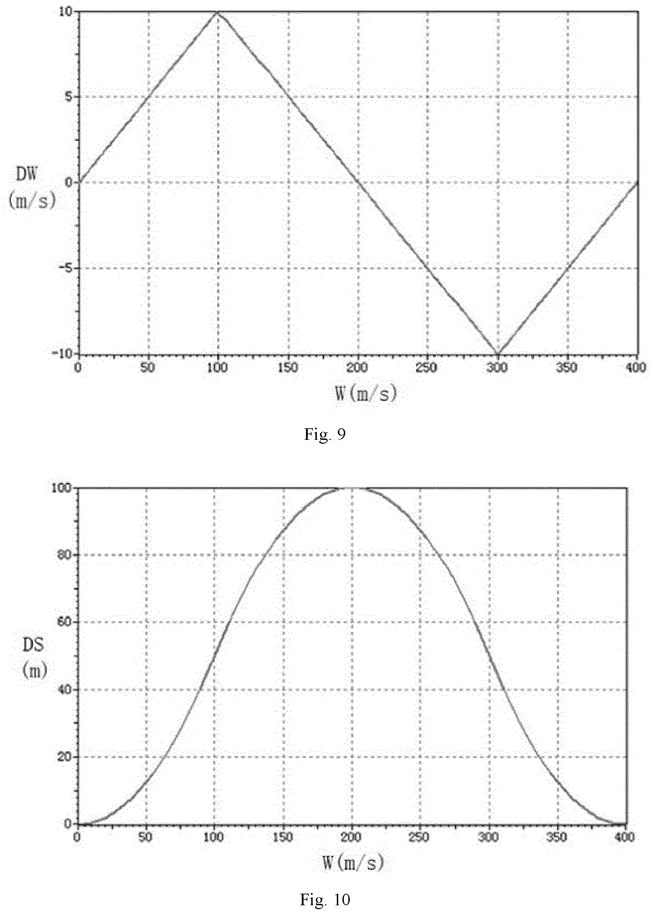

As shown in Figs. 9 and 10, at the energy management terminal (i.e., $W_3$), a velocity (DW) perpendicular to a direction W is 0, and an apparent distance (DS) there is also 0. This method has the same energy dissipation capacity as the bidirectional attitude adjustment method, and the one more attitude adjustment process can ensure that the apparent distance in the perpendicular direction at the end is 0. This method allows for more precise control of a velocity increment and position at the end of an aircraft trajectory during energy management of the aircraft (e.g., solid rocket), thus improving the orbit injection accuracy of the aircraft.

In some optional implementations of this embodiment, the above-mentioned S232 may include the following step:

determining adjustment time in each attitude angle adjustment by using the consumption amount of the apparent velocity modulus and the number of adjustments, wherein the adjustment time corresponds to the consumed amount of the apparent velocity modulus in the attitude angle adjustment.

The adjustment time of each attitude angle adjustment is defined to determine the consumed amount of the apparent velocity modulus in each attitude angle adjustment. As the time is relatively easier to control than the apparent velocity modulus, reflecting the consumed amount of the apparent velocity modulus in each attitude angle adjustment by the adjustment time of each attitude angle adjustment improves the accuracy of energy management.

Further optionally, adjustment time in the first attitude angle adjustment is equal to adjustment time in the third attitude angle adjustment.

In the energy management method for an aircraft provided in this embodiment, energy management is performed by three attitude angle adjustments, which reduces the number of attitude angle adjustments, reduces the data processing amount, and improves the efficiency of energy management while ensuring that the accuracy of orbit control by energy management is not affected.

According to embodiments of the present invention, there is provided an embodiment of a flight control method for an aircraft. It is to be noted that steps illustrated in flow diagrams of the accompanying drawings may be performed in a computer system such as a set of computer executable instructions, and although a logical sequence is illustrated in such a flow diagram, in some situations the steps shown or described may be performed in a sequence different from that shown herein.

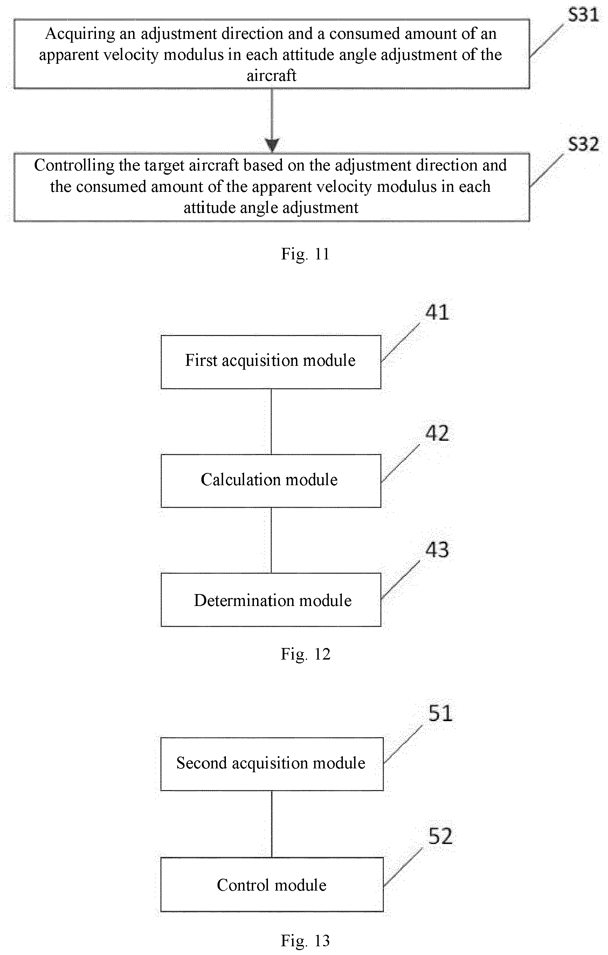

In this embodiment, there is provided a flight control method for an aircraft. The method may be used in an aircraft, such as a solid rocket. Fig. 11 is a flow diagram of an energy management method for an aircraft according to an embodiment of the present invention. As shown in Fig. 11, the process includes steps as follows:

S31, acquiring an adjustment direction and a consumed amount of an apparent velocity modulus in each attitude angle adjustment of the aircraft.

The adjustment direction and the consumed amount of the apparent velocity modulus in each attitude angle adjustment are determined according to the energy management method for an aircraft in the above embodiment.

See description of the embodiment shown in Fig. 5 or 6 for details, which will not be repeated here.

S32, controlling the target aircraft based on the adjustment direction and the consumed amount of the apparent velocity modulus in each attitude angle adjustment.

The aircraft performs attitude control on the target aircraft based on the adjustment direction in each attitude angle adjustment and the consumed amount of the apparent velocity modulus in each attitude angle adjustment. The attitude control on the target aircraft may be correspondingly set according to the actual situation, and is not limited here, so long as it ensures that the attitude control on the target aircraft is based on the adjustment method and the consumed amount of the apparent velocity modulus in each attitude angle adjustment.

In the flight control method for an aircraft provided in this embodiment, due to the adjustment direction and the consumed amount of the apparent velocity modulus in each attitude angle adjustment, a velocity and an apparent distance of the adjusted target aircraft in a direction perpendicular to the apparent velocity direction are both zero while energy is consumed, i.e., a theoretical velocity deviation and a theoretical displacement deviation arising from energy management are both zero, which effectively improves the accuracy of orbit control in energy management, thereby improving the accuracy of flight control.

Also provided in this embodiment is an energy management apparatus for an aircraft, or a flight control apparatus for an aircraft. The apparatus is used to implement the above embodiment and preferred implementations, which have been illustrated and will not be described here. As used below, the term "module" may be a combination of software and/or hardware that implements a predetermined function. Although the apparatuses described in the following embodiment are preferably implemented by software, implementations by hardware or a combination of software and hardware are also possible and contemplated.

This embodiment provides an energy management apparatus for an aircraft, as shown in Fig. 12, including:

a first acquisition module 41 configured to acquire a consumption amount of an apparent velocity modulus, an apparent velocity direction, a consumption amount of an apparent velocity, and a number of attitude angle adjustments of a target aircraft, wherein the number of adjustments is greater than or equal to 3;

a calculation module 42 configured to calculate the size of a target attitude angle based on the consumption amount of the apparent velocity modulus and the consumption amount of the apparent velocity; and

a determination module 43 configured to determine, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero.

In the energy management apparatus for an aircraft provided in this embodiment, the number of attitude angle adjustments of the target aircraft is set to be greater than or equal to 3, and the adjustment direction and the consumed amount of the apparent velocity modulus in each attitude angle adjustment are determined, so that the velocity and the apparent distance of the adjusted target aircraft in the direction perpendicular to the apparent velocity direction are both zero while energy is consumed, i.e., so that a theoretical velocity deviation and a theoretical displacement deviation arising from energy management are both zero, which can effectively improve the accuracy of orbit control in energy management.

This embodiment also provides a flight control apparatus for an aircraft, as shown in Fig. 13, including:

a second acquisition module 51 configured to acquire an adjustment direction and a consumed amount of an apparent velocity modulus in each attitude angle adjustment of the aircraft, wherein the adjustment direction and the consumed amount of the apparent velocity modulus in each attitude angle adjustment are determined according to the energy management method for an aircraft in the first aspect or in any implementation of the first aspect of the present invention; and

a control module 52 configured to control the target aircraft based on the adjustment direction and the consumed amount of the apparent velocity modulus in each attitude angle adjustment.

In the flight control apparatus for an aircraft provided in this embodiment, due to the adjustment direction and the consumed amount of the apparent velocity modulus in each attitude angle adjustment, a velocity and an apparent distance of the adjusted target aircraft in a direction perpendicular to an apparent velocity direction are both zero while energy is consumed, i.e., a theoretical velocity deviation and a theoretical displacement deviation arising from energy management are both zero, which effectively improves the accuracy of orbit control in energy management, thereby improving the accuracy of flight control.

The energy management apparatus for an aircraft, or the flight control apparatus for an aircraft in this embodiment is presented in the form of a functional unit. The unit here refers to ASIC circuitry, a processor and memory executing one or more software or fixed programs, and/or other devices that can provide the above functions.

Further functional description of the above modules is same as that of the corresponding embodiment described above and will not be repeated here.

This embodiment of the present invention further provides an aircraft with the above energy management apparatus for an aircraft shown in Fig. 12, or the flight control apparatus for an aircraft shown in Fig. 13.

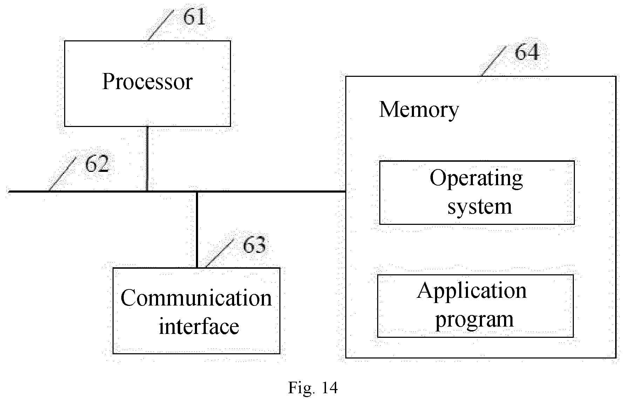

Please refer to Fig. 14. Fig. 14 is a schematic structural diagram of an aircraft provided in an optional embodiment of the present invention, which may include. As shown in Fig. 14, the aircraft may include: at least one processor 61, such as a CPU (Central Processing Unit), at least one communication interface 63, a memory 64, and at least one communication bus 62. The communication bus 62 is configured to implement connection and communication between these components. The communication interface 63 may include a display and a keyboard; optionally, the communication interface 63 may also include a standard wired interface and wireless interface. The memory 64 may be a high-speed RAM (random access memory) (volatile random access memory), and may also be a non-volatile memory, such as at least one disk memory. The memory 64 may optionally also be at least one storage device located away from the aforementioned processor 61. The processor 61 may incorporate the apparatus described in Fig. 12 or 13, and an application program is stored in the memory 64, and the processor 61 calls program codes stored in the memory 64 to execute any of the method steps described above.

The communication bus 62 may be a peripheral component interconnect (PCI) bus or an extended industry standard architecture (EISA) bus, or the like. The communication bus 62 may be divided into an address bus, a data bus, a control bus, and the like. For ease of representation, the bus is represented by only one thick line in Fig. 14, but it does not mean that there is only one bus or one type of bus.

The memory 64 may include a volatile memory, such as a random-access memory (RAM); the memory may also include a non-volatile memory, such as a flash memory, a hard disk drive (HDD) or a solid-state disk (SSD); and the memory 64 may also include a combination of the above-mentioned types of memory.

The processor 61 may be a central processing unit (CPU), a network processor (NP), or a combination of a CPU and an NP.

The processor 61 may further include a hardware chip. The above hardware chip may be an application-specific integrated circuit (ASIC), a programmable logic device (PLD), or a combination thereof. The above-mentioned PLD may be a complex programmable logic device (CPLD), a field-programmable gate array (FPGA), a general array logic (GAL) or any combination thereof.

Optionally, the memory 64 may also be configured to store program instructions. The processor 61 may call program instructions to implement the energy management method for an aircraft shown in the embodiment of Figs. 5 and 6 of the present application, or the flight control method for an aircraft described in Fig. 11.

An embodiment of the present invention further provides a non-transitory computer storage medium, which stores computer executable instructions, wherein the computer executable instructions may be used to execute the energy management method for an aircraft or the flight control method for an aircraft in any method embodiment described above. The storage medium may be a magnetic disk, an optical disk, a ready only memory (ROM), a random access memory (RAM), a flash memory, a hard disk drive (HDD), a solid-state drive (SSD), or the like; and the storage medium may also include a combination of the above-mentioned types of storage.

Although the embodiments of the present invention are described with reference to the accompanying drawings, those skilled in the art can make various modifications and variations without departing from the spirit and scope of the present invention, and such modifications and variations fall within the scope of the appended claims.

## Claims

1. An energy management method for an aircraft, comprising:

    acquiring a consumption amount of an apparent velocity modulus, an apparent velocity direction, a consumption amount of an apparent velocity, and a number of attitude angle adjustments of the aircraft, wherein the number of adjustments is 3;
    calculating the size of a target attitude angle based on the consumption amount of the apparent velocity modulus and the consumption amount of the apparent velocity; and
    determining, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted aircraft in a direction perpendicular to the apparent velocity direction are both zero,
    wherein determining, based on the consumption amount of the apparent velocity modulus, the apparent velocity direction and the number of adjustments, an adjustment direction and a consumed amount of the apparent velocity modulus in each attitude angle adjustment, so that a velocity and an apparent distance of the adjusted aircraft in a direction perpendicular to the apparent velocity direction are both zero comprises:

        determining, based on the number of adjustments and the apparent velocity direction, a direction of a first attitude angle adjustment to be a first direction perpendicular to the apparent velocity direction, a direction of a second attitude angle adjustment to be a second direction perpendicular to the apparent velocity direction, and a direction of a third attitude angle adjustment to be the first direction, wherein the first direction is opposite to the second direction; and
        determining the consumed amount of the apparent velocity modulus in each attitude angle adjustment by using the consumption amount of the apparent velocity modulus and the number of adjustments, wherein the sum of a consumed amount of the apparent velocity modulus in the first attitude angle adjustment and a consumed amount of the apparent velocity modulus in the third attitude angle adjustment is equal to a consumed amount of the apparent velocity modulus in the second attitude angle adjustment.

2. The method according to claim 1, wherein the consumed amount of the apparent velocity modulus in each attitude angle adjustment is expressed by the following formula:

$$(W_1 - W_0) + (W_3 - W_2) = (W_2 - W_1)$$

where $W_0 = 0$, $W_1$ is the consumed amount of the apparent velocity modulus in the first attitude angle adjustment, $W_2$ is the sum of the consumed amounts of the apparent velocity modulus in the first attitude angle adjustment and the second attitude angle adjustment, and $W_3$ is the sum of the consumed amounts of the apparent velocity modulus in the first attitude angle adjustment, the second attitude angle adjustment and the third attitude angle adjustment.

3. The method according to claim 2, wherein the consumed amount of the apparent velocity modulus in the first attitude angle adjustment is equal to the consumed amount of the apparent velocity modulus in the third attitude angle adjustment.

4. The method according to claim 1, wherein determining the consumed amount of the apparent velocity modulus in each attitude angle adjustment by using the consumption amount of the apparent velocity modulus and the number of adjustments comprises:
determining adjustment time in each attitude angle adjustment by using the consumption amount of the apparent velocity modulus and the number of adjustments, wherein the adjustment time corresponds to the consumed amount of the apparent velocity modulus in each attitude angle adjustment.

5. The method according to claim 4, wherein adjustment time in the first attitude angle adjustment is equal to adjustment time in the third attitude angle adjustment.

6. The method according to any one of claims 1-5, wherein the size of the target attitude angle is calculated by the following formula:

$$\varphi_{pr} = \mathrm{acos}\left(1 - \frac{\Delta V}{W_1}\right)$$

where $\varphi_{pr}$ is the target attitude angle, $\Delta V$ is the consumption amount of the apparent velocity, and $W_3$ is the sum of the consumed amounts of the apparent velocity modulus in the first attitude angle adjustment, the second attitude angle adjustment and the third attitude angle adjustment.

7. A flight control method for an aircraft, comprising:

acquiring an adjustment direction and a consumed amount of an apparent velocity modulus in each attitude angle adjustment of the aircraft, wherein the adjustment direction and the consumed amount of the apparent velocity modulus in each attitude angle adjustment are determined according to the energy management method for an aircraft of any one of claims 1-6; and
controlling the aircraft based on the adjustment direction and the consumed amount of the apparent velocity modulus in each attitude angle adjustment.

8. An aircraft, comprising:
a memory and a processor communicatively connected to each other, wherein the memory stores computer instructions, which are executed by the processor to execute the energy management method for an aircraft of any one of claims 1-6 or the flight control method for an aircraft of claim 7.

9. A computer-readable storage medium, storing computer instructions configured to cause a computer to execute the energy management method for an aircraft of any one of claims 1-6 or the flight control method for an aircraft of claim 7.

Fig. 1

Fig. 2

Fig. 3

Fig. 4

Acquiring a consumption amount of an apparent velocity modulus, an apparent velocity direction, a consumption amount of an apparent velocity, and a number of times of attitude angle adjustments of a target aircraft

S11

Calculating the size of a target attitude angle based on the consumption amount of the apparent velocity modulus and the consumption amount of the apparent velocity

S12

Determining, based on the consumption amount of the apparent velocity modulus, the apparent velocity direction and the number of times of adjustments, an adjustment direction and a consumed amount of the apparent velocity modulus in each attitude angle adjustment, so that a velocity and an apparent distance of the adjusted target aircraft in a direction perpendicular to the apparent velocity direction are both zero

S13

Fig. 5

Acquiring a consumption amount of an apparent velocity modulus, an apparent velocity direction, a consumption amount of an apparent velocity, and a number of times of attitude angle adjustments of a target aircraft

S21

Calculating the size of a target attitude angle based on the consumption amount of the apparent velocity modulus and the consumption amount of the apparent velocity

S22

S23

Determining, based on the number of times of adjustments and the apparent velocity direction, a direction of a first attitude angle adjustment to be a first direction perpendicular to the apparent velocity direction, a direction of a second attitude angle adjustment to be a second direction perpendicular to the apparent velocity direction, and a direction of a third attitude angle adjustment to be the first direction

S231

Determining the consumed amount of the apparent velocity modulus in each attitude angle adjustment by using the consumption amount of the apparent velocity modulus and the number of times of adjustments

S232

Fig. 6

Fig. 7

Fig. 8

Fig. 9

Fig. 10

S31

Acquiring an adjustment direction and a consumed amount of an apparent velocity modulus in each attitude angle adjustment of the aircraft

S32

Controlling the target aircraft based on the adjustment direction and the consumed amount of the apparent velocity modulus in each attitude angle adjustment

Fig. 11

41

First acquisition module

42

Calculation module

43

Determination module

Fig. 12

51

Second acquisition module

52

Control module

Fig. 13

Fig. 14

Europäisches
Patentamt

European
Patent Office

Office européen
des brevets

# EUROPEAN SEARCH REPORT

Application Number

EP 21 19 2662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/030612 A1 (CONSTANS FLORIAN [FR] ET AL) 31 January 2013 (2013-01-31) * paragraph [0001] - paragraph [0019] * * paragraph [0095] - paragraph [0164]; figures 1-3 * | 1-9 | INV. B64G1/24 G05D1/00 G08G5/00 |
| A | CN 110 304 270 A (NINGBO SPACE ENGINE TECH CO LTD) 8 October 2019 (2019-10-08) * the whole document * | 1-9 | |
| A | US 6 062 513 A (LAMBREGTS ANTONIUS A [US]) 16 May 2000 (2000-05-16) * abstract; figures 1-5 * | 1 | |
| A | WO 2014/020596 A1 (ISRAEL AEROSPACE IND LTD [IL]) 6 February 2014 (2014-02-06) * the whole document * | 1 | |

TECHNICAL FIELDS
SEARCHED       (IPC)

B64G
G05D

The present search report has been drawn up for all claims

| Place of search | Date of completion of the search | Examiner |
|---|---|---|
| Munich | 18 January 2022 | Hofmann, Udo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 2662

This annex lists the patent family members relating to the patent documents cited in  the above-mentioned European search report.
The members are as contained in the European Patent Office EDP file on
The European Patent Office is in no way liable for these particulars which are merely given for the purpose of information.

18-01-2022

| Patent document cited in search report | | Publication date | Patent family member(s) | | Publication date |
|---|---|---|---|---|---|
| US 2013030612 | A1 | 31-01-2013 | CN | 102903262 A | 30-01-2013 |
| | | | FR | 2978587 A1 | 01-02-2013 |
| | | | US | 2013030612 A1 | 31-01-2013 |
| CN 110304270 | A | 08-10-2019 | NONE | | |
| US 6062513 | A | 16-05-2000 | DE | 69928478 T2 | 17-08-2006 |
| | | | EP | 0985993 A2 | 15-03-2000 |
| | | | US | 6062513 A | 16-05-2000 |
| WO 2014020596 | A1 | 06-02-2014 | IL | 221263 A | 31-08-2017 |
| | | | WO | 2014020596 A1 | 06-02-2014 |

EPO FORM P0459

For more details about this annex : see Official Journal of the European Patent Office, No. 12/82